# EUROPEAN PATENT SPECIFICATION

(11) **EP 1 148 943 B1**
(45) Date of publication and mention of the grant of the patent: **12.03.2003**
(21) Application number: 99973393.4
(22) Date of filing: 22.11.1999
(51) Int. Cl.: B01J 19/10

(54) **PROCESS AND APPARATUS FOR IRRADIATING FLUIDS**
VERFAHREN UND VORRICHTUNG ZUR BESTRAHLUNG VON FLUIDEN
PROCEDE ET APPAREIL D'IRRADIATION DE FLUIDES

(30) Priority: 12.12.1998 GB 9827360
(43) Date of publication of application: 31.10.2001
(73) Proprietor: Accentus plc, Didcot, Oxfordshire OX11 0QJ (GB)
(72) Inventor: PERKINS, John, Patrick, Ilminster, Somerset TA19 9JA (GB)
(74) Representative: Mansfield, Peter Turquand
(86) International application number: GB9903857
(87) International publication number: WO00035579

(56) References cited:
- GB-A- 2 306 202
- US-A- 4 556 467
- US-A- 5 658 534

## Description

The present invention relates to a process and an apparatus for subjecting fluids to irradiation by high intensity ultrasound.

If a liquid is subjected to a high ultrasonic intensity, that is to say an intensity greater than about 0.3 W/cm² at a frequency typically in the range 10 kHz to 100 kHz, then there is a significant deposition of energy into the liquid through attenuation and non-linear effects. This may lead to physical changes (for example streaming, mixing, or emulsification) or to chemical changes, and the present invention is principally concerned with the latter, which may be referred to as sonochemistry. The most significant sonochemical effects are usually associated with cavitation in the liquid, especially transient vaporous cavitation, which typically only occurs at an ultrasonic intensity above a threshold which is typically above 0.3 W/cm² and is different for different liquids.

An apparatus for subjecting a liquid to a very high intensity is described in GB 2 243 092 B (UKAEA), in which a transducer is attached to one end of a tapered resonant coupler, the coupler having a nodal flange; this flange is attached to a sleeve projecting from the wall of a pipe containing the liquid, and the space around the sides and end of the coupler within the sleeve is filled with a coupling liquid such as olive oil. The use of such a nodal flange mounting enables a transducer of higher power to be used, but the apparatus is somewhat complex. It has also been suggested, for example in US 4 433 916 (Hall), to attach a plurality of acoustic transducers directly to the wall of a cylindrical vessel containing a fluid, with a specified phase difference between the acoustic signals applied to adjacent transducers. Similarly, US 4 369 100 (Sawyer) describes attaching ultrasonic transducers to the outer wall of an annular duct so that both the inner and outer walls are set in resonance. And US 2 578 505 (Carlin) also describes a pipe with several transducers attached to the surface arranged in one or more circumferential rings.

According to the present invention there is provided an apparatus for subjecting a fluid to irradiation by high intensity ultrasound, the apparatus comprising a generally cylindrical vessel, and a multiplicity of ultrasonic transducers attached to a wall of the vessel in an array that extends both circumferentially and longitudinally so as to radiate ultrasonic waves into a fluid in the vessel, the vessel being large enough that each transducer radiates into fluid at least 0.1 m thick, each transducer being connected to a signal generator arranged so that the transducer radiates no more than 3 W/cm², the transducers being sufficiently close to each other, and the number of transducers being sufficiently high, that the power dissipation within the vessel is at least 25 W/litre but no more than 150 W/litre.

The values of power given here are those of the electrical power delivered to the transducer or the transducers, as this is relatively easy to determine. There will inevitably be losses in converting electrical to acoustic power, and in transmitting the acoustic power from the transducer into the fluid within the vessel, but these are difficult to assess accurately. The transducer typically is at least 90% efficient in converting electrical to acoustic power.

The power radiated by each transducer may for example be in the range 1-2 W/cm². This is a similar power intensity to that used in ultrasonic cleaning baths, and is above the threshold required to achieve cavitation. The resonant ultrasonic coupler with a nodal flange (as described in GB 2 243 092 B) can achieve significantly higher power intensities, for example radiating more than 10 W/cm², but the lower intensity ultrasound generated by the present invention can propagate much further through a liquid, and the stresses in the transducers are much less.

The thickness of fluid into which each transducer radiates, that is the width or diameter of the vessel, is preferably no more than 1.2 m, and in a preferred embodiment the vessel is cylindrical of diameter in the range 0.2 to 0.6 m, such as 0.3 m.

Preferably the number of transducers, the power of the transducers, and the volume of the vessel are such that the power density is between 40 and 80 W/litre, more preferably between 60 and 70 W/litre. Although this does not produce such high power densities as can be achieved with an irradiator as described in GB 2 243 092 (UKAEA), it enables a larger volume to be irradiated and with greater uniformity, at sufficient intensity to cause cavitation; this is partly because very high cavitation levels near the vessel wall can have the effect of shielding parts of the fluid further from the wall.

In a preferred embodiment the vessel is double walled, the transducers being attached to the outer wall, the fluid to be treated being enclosed within the inner wall, and the space between the two walls being filled by a low attenuation buffer liquid whose cavitation threshold is above that of the liquid to be treated.

The width of the gap between the two walls is desirably equal to a quarter wavelength in the coupling liquid (which for a frequency of 20 kHz would be about 18 mm), or an odd-numbered multiple of that distance, to optimise the matching of impedance.

In one embodiment some of the transducers are energized at one frequency and other transducers at a different frequency, for example at 20 kHz and at 40 kHz. This can be very effective at causing cavitation and energy deposition within a fluid.

The invention will now be further and more particularly described, by way of example only, and with reference to the accompanying drawings in which:
Figure 1 shows a longitudinal sectional view through an irradiator apparatus;
Figure 2 shows a longitudinal sectional view through an alternative irradiator apparatus; and
Figure 3 shows a sectional view on the line 3-3 of figure 2.

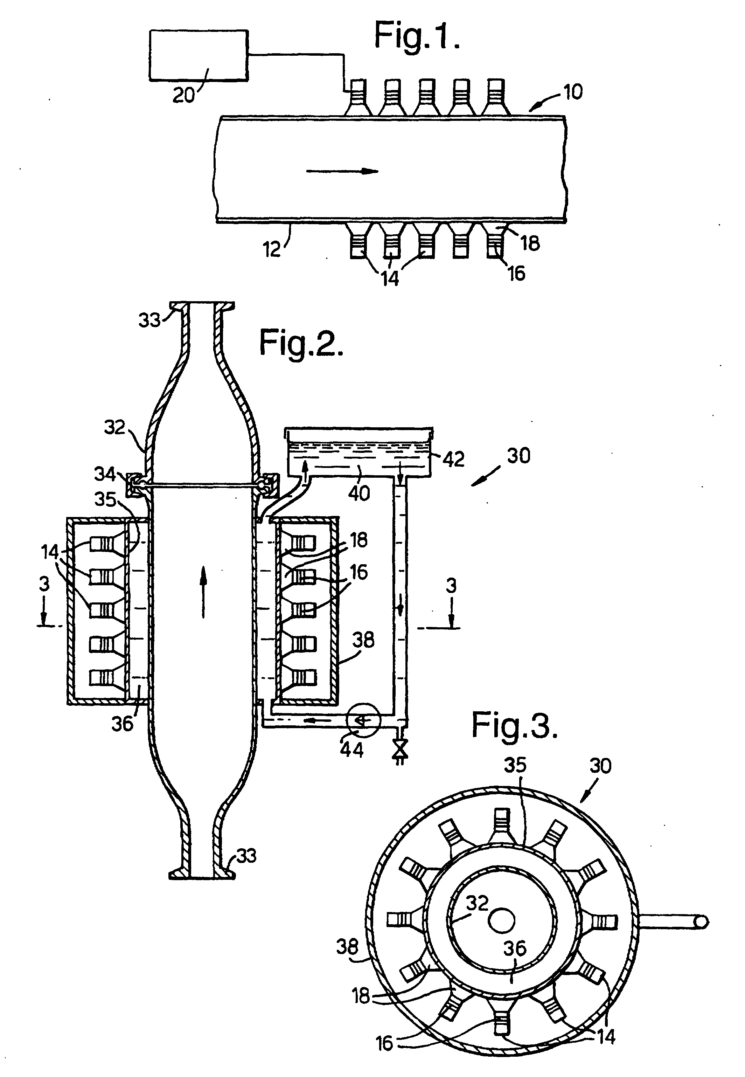

Referring to figure 1 an irradiator 10 incorporates a stainless-steel duct 12 of internal diameter 0.31 m and of wall thickness 2 mm. To the outside of the wall are attached sixty transducer modules 14 closely packed in a square array. Each transducer module 14 comprises a 50 W piezoelectric transducer 16 which resonates at 20 kHz, attached to a conically flared titanium coupling block 18 by which it is connected to the wall, the wider end of each block being of diameter 63 mm. The transducers modules 14 are arranged in five circumferential rings each of twelve modules 14, the centres of the coupling blocks 18 being on a square pitch of 82 mm. The irradiator 10 also incorporates five signal generators 20 (only one is shown) each of which drives all the transducers 16 in a ring. All the transducers 16 are activated at 20 kHz.

In use of the irradiator 10, a liquid is caused to flow through the duct 12 and each transducer 16 activated. Each transducer 16 radiates 50 watts over a circle of diameter 63 mm, that is an intensity of 1.6 W/cm². The energy from all the transducers 16 is dissipated over the cylindrical volume of the duct 12, that is to say over a volume of about 31 litres (that is the volume enclosed by the array of transducer modules 14), so the power density is about 97 W/litre, or about 80 W/litre if the ultrasonic irradiation is also effective 40 mm beyond each end of the array of transducer modules 14.

In one modification, three of the rings of transducers 16 are as described above, while the other two rings resonate at 40 kHz and are driven at that frequency (the rings being of alternate frequency along the duct 12). The power intensity and power density are as described earlier, but the fluid is consequently exposed simultaneously to two different frequencies generating cavitation. This can produce more effective sonochemical results.

Referring now to figures 2 and 3 there is shown an alternative irradiator 30 which has many features in common with that of figure 1. The irradiator 30 includes a generally cylindrical duct 32 of polytetrafluoroethylene (PTFE) of internal diameter 0.31 m and of wall thickness 3 mm, which tapers at each end down to an internal diameter of 0.10 m and a wall thickness of 6 mm provided with a flange 33 for connection to other process ducts (not shown), and has a sealed joint 34 for inspection or cleaning purposes. Around the outside of the duct 32 is a concentric stainless-steel steel tube 35 of wall thickness 1 mm and of external diameter 0.354 m, such that there is a gap 36 of width 18 mm between the duct 32 and the tube 35. Sixty transducer modules 14 are attached to the outer surface of the tube 35 in a rectangular array forming five rings of twelve, the spacing between the centres of the coupling blocks 18 being 82 mm parallel to the longitudinal axis of the tube 35 and 92.7 mm circumferentially. The array of transducers 14 is enclosed by an acoustic shield 38. A coupling liquid such as olive oil 40 is used to fill the gap 36 and is re-circulated from a reservoir 42 by a pump 44. This coupling liquid has a higher threshold for cavitation than water, and has an impedance which is between that of the titanium coupling block 18 and that of the fluid within the duct 32 (typically mainly water, or an industrial solvent); at a frequency of 20 kHz the wavelength of the sound in this oil is 72 mm, so that the gap 36 is of width equal to a quarter of the wavelength.

In use of the irradiator 30, a liquid is caused to flow through the duct 32 and each transducer 16 is activated by a power supply (not shown) at 20 kHz. The dissipated power intensity and power density are as described in relation to figure 1. The impedance matching provided by the oil in the gap 36 allows more of the applied power to enter the fluid within the duct 32 while reducing erosion at the inner, irradiating, surface of the tube 35.

It will be appreciated that the power intensity in the irradiator 30 may be increased by increasing the numbers of transducer modules 14 in each ring. For example there might be sixteen transducer modules 14 in each ring, if the coupling blocks 18 were arranged on a circumferential spacing of 69.5 mm. This would increase both the power density and the power intensity by 33 percent. It will also be appreciated that the duct 32 can be of any material suited to the liquid being processed, and that it may form part of a pressure vessel.

Furthermore the ultrasonic frequencies or frequencies might be different from those described above, and might be as high as 140 kHz or even 200 kHz, as such high frequencies tend to reduce the risk of cavitation erosion.

## Claims

1. An apparatus for subjecting a fluid to irradiation by high intensity ultrasound, the apparatus comprising a generally cylindrical vessel (12, 32), and a multiplicity of ultrasonic transducers (14) attached to a wall of the vessel in an array that extends both circumferentially and longitudinally so as to radiate ultrasonic waves into a fluid in the vessel, the vessel (12, 32) being large enough that each transducer (14) radiates into fluid at least 0.1 m thick, each transducer (14) being connected to a signal generator arranged so that the transducer radiates no more than 3 W/cm², the transducers (14) being sufficiently close to each other, and the number of transducers (14) being sufficiently high, that the power dissipation within the vessel (12, 32) is at least 25 W/litre but no more than 150 W/litre.

2. An apparatus as claimed in claim 1 wherein the power radiated by each transducer (14) is in the range 1-2 W/cm².

3. An apparatus as claimed in claim 1 or claim 2 wherein the number of transducers (14), the power of the transducers (14), and the volume of the vessel (12, 32) are such that the power density is between 40 and 80 W/litre.

4. An apparatus as claimed in any one of the preceding claims wherein the vessel (32) is double walled, the transducers (14) being attached to the outer wall (35), the fluid to be treated is enclosed within the inner wall (32), and the space (36) between the two walls (32, 35) is filled by a low attenuation buffer liquid whose cavitation threshold is above that of the liquid to be treated.

5. An apparatus as claimed in any one of the preceding claims comprising a plurality of ultrasonic signal generators, each signal generator being arranged to energise a separate group of the transducers.

6. An apparatus as claimed in claim 5 wherein, in each said group, the transducers are adjacent to each other.

7. An apparatus as claimed in claim 5 or claim 6 wherein at least one group of the transducers resonates at a different frequency to other groups of the transducers, and each signal generator is arranged to energise the respective group of the transducers at their resonant frequency.

## Patentansprüche

1. Ein Apparat für das Aussetzen eines Fluids bzw. einer Flüssigkeit einer Bestrahlung mit Ultraschall hoher Intensität, wobei der Apparat ein im Wesentlichen zylindrisches Gefäß (12, 32) aufweist und eine Mehrzahl von Ultraschallwandlern (14) aufweist, welche an einer Wand des Gefäßes in einer Anordnung bzw. einem Feld befestigt sind, welche bzw. welches sich sowohl um den Umfang als auch entlang der Längserstreckung erstreckt, so dass Ultraschallwellen in ein Fluid bzw. eine Flüssigkeit in dem Gefäß eingestrahlt werden, wobei das Gefäß (12, 32) groß genug ist, dass jeder Wandler (14) in das Fluid bzw. die Flüssigkeit wenigstens in eine Dicke bzw. Tiefe von 0,1 m einstrahlt, wobei jeder Wandler (14) mit einem Signalgenerator verbunden ist, welcher so angeordnet bzw. ausgebildet ist, dass der Wandler nicht mehr als 3 W/cm² abstrahlt und wobei die Wandler (14) ausreichend nahe zueinander sind und die Anzahl der Wandler (14) ausreichend hoch ist, dass die Verlustleistung bzw. Energieverteilung innerhalb des Gefäßes (12, 32) wenigstens 25 W/Liter aber nicht mehr als 150 W/Liter beträgt.

2. Ein Apparat, wie in Anspruch 1 beansprucht, wobei die durch jeden Wandler (14) ein- bzw. abgestrahlte Energie im Bereich von 1 bis 2 W/cm² liegt.

3. Ein Apparat, wie in Anspruch 1 oder in Anspruch 2 beansprucht, wobei die Anzahl der Wandler (14), die Energie bzw. Leistung der Wandler (14) und das Volumen des Gefäßes (12, 32) so sind, dass die Energiedichte zwischen 40 und 80 W/Liter liegt.

4. Ein Apparat, wie in irgendeinem der vorhergehenden Ansprüche beansprucht, wobei das Gefäß (32) doppelwandig ist, wobei die Wandler (14) an der Außenwand (35) befestigt sind, wobei das Fluid bzw. die Flüssigkeit, das bzw. die zu behandeln ist bzw. sind, innerhalb der Innenwand (32) eingeschlossen ist bzw. sind und der Raum (36) zwischen den beiden Wänden (32, 35) mit einer Pufferflüssigkeit niedriger Dämpfung gefüllt ist, deren Schwelle für Kavitation oberhalb derjenigen der zu behandelnden Flüssigkeit liegt.

5. Ein Apparat, wie in irgendeinem der vorhergehenden Ansprüche beansprucht, welcher eine Mehrzahl von Ultraschallsignalgeneratoren aufweist, wobei jeder Signalgenerator so ausgebildet ist, dass er eine separate Gruppe der Wandler mit Energie speist.

6. Ein Apparat, wie in Anspruch 5 beansprucht, wobei in jeder der besagten Gruppen die Wandler zueinander benachbart sind.

7. Ein Apparat, wie in Anspruch 5 oder in Anspruch 6 beansprucht, wobei wenigstens eine Gruppe von Wandlern in Bezug auf andere Gruppen von Wandlern bei einer anderen Frequenz in Resonanz ist, und dass jeder Signalgenerator so ausgebildet ist, dass er die jeweilige Gruppe der Wandler bei ihrer jeweiligen Resonanzfrequenz mit Energie speist.

## Revendications

1. Appareil destiné à soumettre un fluide au rayonnement au moyen d'ultrasons haute intensité, l'appareil comprenant une cuve généralement cylindrique (12, 32), et une pluralité de transducteurs à ultrasons (14) fixés à une paroi de la cuve dans un agencement qui s'étend à la fois de manière circonférentielle et longitudinale de façon à rayonner des ondes ultrasonores dans un fluide situé dans la cuve, la cuve (12, 32) étant assez grande pour que chaque transducteur (14) rayonne dans le fluide au moins 0,1 m d'épaisseur, chaque transducteur (14) étant connecté à un générateur de signaux disposé de telle façon que le transducteur ne rayonne pas plus de 3 W/cm², les transducteurs (14) étant suffisamment proches les uns des autres, et le nombre de transducteurs (14) étant suffisamment élevé pour que la dissipation d'énergie à l'intérieur de la cuve (12, 32) soit au moins de 25 W/litre mais inférieure à 150 W/litre.

2. Appareil selon la revendication 1, dans lequel l'énergie rayonnée par chaque transducteur (14) est comprise dans la plage allant de 1 à 2 W/cm².

3. Appareil selon la revendication 1 ou la revendication 2, dans lequel le nombre de transducteurs (14), l'énergie des transducteurs (14), et le volume de la cuve (12, 32) sont tels que la puissance volumique se situe entre 40 et 80 W/litre.

4. Appareil selon l'une quelconque des revendications précédentes, dans lequel la cuve (32) a une double paroi, les transducteurs (14) étant fixés à la paroi extérieure (35), le fluide à traiter est enfermé à l'intérieur de la paroi intérieure (32), et l'espace (36) entre les deux parois (32, 35) est rempli d'un liquide tampon à faible atténuation dont le seuil de cavitation est supérieur à celui du liquide à traiter.

5. Appareil selon l'une quelconque des revendications précédentes, comprenant une pluralité de générateurs de signaux ultrasonores, chaque générateur de signaux étant disposé pour exciter un groupe séparé de transducteurs.

6. Appareil selon la revendication 5, dans lequel, dans chacun desdits groupes, les transducteurs sont adjacents les uns des autres.

7. Appareil selon la revendication 5 ou la revendication 6, dans lequel au moins un groupe des transducteurs résonne à une fréquence différente de celle des autres groupes des transducteurs, et chaque générateur de signaux est disposé de façon à exciter le groupe respectif des transducteurs à leur fréquence de résonance.
